# EUROPÄISCHE PATENTSCHRIFT

(11) **EP 2 491 291 B1**
(45) Veröffentlichungstag und Bekanntmachung des Hinweises auf die Patenterteilung: **06.05.2015**
(21) Anmeldenummer: 10773247.1
(22) Anmeldetag: 19.10.2010
(51) Int. Cl.: F16L 11/08

(54) **MEHRSCHICHTIGER SCHLAUCH MIT EINER SCHLAUCHFÖRMIGEN INNENFOLIE, VERFAHREN ZU DESSEN HERSTELLUNG SOWIE DESSEN VERWENDUNG**
MULTILAYER TUBE HAVING A TUBULAR INNER FILM, METHOD FOR PRODUCING SAME, AND USE THEREOF
FLEXIBLE MULTICOUCHE COMPORTANT UNE PELLICULE INTÉRIEURE TUBULAIRE, PROCÉDÉ DE FABRICATION DE CE FLEXIBLE ET UTILISATION

(30) Priorität: 20.10.2009 DE 102009050084
(43) Veröffentlichungstag der Anmeldung: 29.08.2012
(73) Patentinhaber: Fasel, Albert, 65520 Bad Camberg (DE); Quitter, René, 57548 Kirchen (DE); Hartenstein, Jürgen, 65549 Limburg (DE)
(72) Erfinder: FASEL, Albert, 65520 Bad Camberg (DE); QUITTER, René, 57548 Kirchen (DE)
(74) Vertreter: Greiber, Karl Dieter
(86) Internationale Anmeldenummer: PCT/EP2010/006362
(87) Internationale Veröffentlichungsnummer: WO 2011/047824

(56) Entgegenhaltungen:
- EP-A1- 1 857 259
- GB-A- 1 357 355
- US-A1- 2007 089 797
- US-B1- 6 531 559

## Beschreibung

Die Erfindung betrifft einen mehrschichtigen Schlauch, der eine schlauchförmige Innenfolie aufweist, die aus einem synthetischen Polymer besteht, ein Verfahren zu dessen Herstellung sowie dessen Verwendung, insbesondere zum Sanieren und Auskleiden von Rohrleitungen.

Schläuche der vorstehend genannten Art sind seit längerem bekannt, auch ist der Einsatz dieser Schläuche zum Sanieren von Rohrleitungen bereits in einer ganzen Anzahl von Dokumenten wie Patenten und Patentanmeldungen beschrieben. Schläuche dieser Art werden auch bereits vielfach in der Praxis eingesetzt.

Zum Sanieren eines Rohres wird der Schlauch in das Innere des zu sanierenden Rohres gebracht, mittels Luft oder Wasser unter Druck an die Innenwand des Rohres gedrückt, und der Schlauch, der vorher noch faltbar und flexibel war, wird gehärtet, damit der Schlauch mechanisch stabil wird und eine feste Einheit mit dem zu sanierenden Rohr bildet.

So wird in der GB 1357355 ein Verfahren beschrieben, bei dem zunächst auf eine schlauchförmige Innenfolie bzw. Membran ein schlauchförmiges Flächengebilde aus Fasern angeordnet wird, nach außen wird mit einer Folie abgeschlossen, die längs der Ränder folienverschweißt ist. Unmittelbar vor der Beschichtung d. h. dem Auskleiden des zu reparierenden Rohrs wird durch Einpumpen - die Außenfolie wird dazu punktiert - oder durch Injektion die Schicht, welche Fasern enthält, mit einem unausgehärteten Kunstharz getränkt. Dabei kann es zu ungleichmäßigen Kunstharzverteilungen kommen, was zu einer unerwünschten Instabilität nach dem Aushärten führt.

Als Material, aus dem die Innenfolie hergestellt werden soll und aus dem auch die äußere Folie bestehen kann, werden übliche Kunststoffe wie Polyethylen, Polyvinylchlorid, Butyl, Gummi, Cellulosenitrat, Neopren und Polyester vorgeschlagen. Hinweise ein Material einzusetzen, wie es die Erfindung lehrt, sind dieser britischen Patentschrift nicht zu entnehmen.

In der DE 2834511 C2 wird eine Weiterentwicklung beschrieben, bei der zunächst auf eine schlauchförmige Innenfolie eine Schicht aus härtbarem Kunstharz aufgebracht wird, auf diese Schicht wird dann eine ausdehnbare und zusammenziehbare Gewebegeschicht aus sich kreuzenden und in etwa in gleichem Winkel zur Längsachse des Rohres verlaufenden Fäden aufgebracht, -anschließend wird die Außenfolie angebracht.

Als Material für die Innenfolie wird ein ionomerer Kunststoff des Typs SURLYN A sowie Polyurethangummi, ein Polyethylen wie Polyethylenvinylacetat und PVC empfohlen. Auch in dieser Druckschrift fehlen jegliche Hinweise auf den Einsatz der speziellen Polymere, welche gemäß der Erfindung eingesetzt werden sollen.

Abgesehen davon, dass PVC für verschiedene Zwecke ungeeignet ist, sind die dort angegebenen Kunststoffe für verschiedene Flüssigkeiten und Gase, die durch die Rohrleitung transportiert werden sollen, nicht stabil genug, sodass es zum Auflösen oder Abbröckeln des für die Innenfolie verwendeten Materials kommen kann. Das Auflösen von Polymeren oder Verunreinigen von abgelösten oder abgerissenen Partikeln, Folienfetzen und dergleichen kann aber von großem Nachteil sein, weil einmal das zu fördernde Gut verunreinigt wird oder noch mit mehr Ballaststoffen beladen wird, auch kann es zu Verstopfungen und Schäden an den Rohren kommen. Das kann soweit kommen, dass die sanierten Rohrleitungen wieder undicht werden und somit wieder saniert oder erneuert werden müssen.

In der EP 0278466 werden mehrschichtige Einlegeschläuche beschrieben, die mehrere Fasern enthaltende Schichten aufweisen. Der Innenfolienschlauch soll aus einer fluidundurchlässigen Membran bestehen. Außer der Angabe, dass diese Membran aus einem synthetischen Kunststoff bestehen soll, finden sich keinerlei Hinweise auf eine Materialauswahl.

In der EP 0712352 B 1 werden insbesondere zahlreiche apparative Hinweise zur Herstellung von Auskleideschläuchen gegeben. Es fehlen jedoch konkrete Hinweise für eine geeignete Materialauswahl für die Innenfolie.

In der DE 6001264 T2, einer Übersetzung des europäischen Patents EP 115256 B1 wird ein Einlegeschlauch zur Verwendung bei der Rekonstruktion von Rohrleitungen und Pipelines beschrieben, der eine innere und eine äußere Schicht sowie eine Anzahl von Zwischenschichten aufweist.

Auch hier wurden zum Material für die Innenfolie und zugleich auch für die Außenfolie lediglich allgemeine Angaben gemacht wie flüssigkeitsdichtes Plastikfolienmaterial; genannt werden Polyester, Polyethylen, Polypropylen, Polyamid oder ein Laminat aus diesen Materialien. Auch hier treten die bekannten Probleme bezüglich der Stabilität der Innenfolie auf.

In der DE 102006054268 A1 wird ein rohrförmiges Formteil mit einer Wandung beschrieben, wobei die Wandung einen Verbund aus zwei Schichten umfasst, nämlich eine Schicht aus einem Fluorpolymermaterial und einer Verstärkungsschicht. Diese rohrförmigen Formteile sollen als Ladeluftleitungen bei Verbrennungsmotoren zum Einsatz gelangen. Schläuche, wie sie die Erfindung offenbart, und entsprechende Verwendungen werden in dieser Druckschrift nicht erwähnt oder nahegelegt.

Es gibt auch in der Praxis verwendete mehrschichtige Schläuche, die eine Innenfolie auf Basis von PE/PA, nämlich Polyethylen/Polyamid aufweisen, die abgesehen davon, dass ihre Stabilität gegenüber mechanischen und chemischen Einflüssen noch zu wünschen übrig lässt, fest mit der darüber liegenden textilen Schicht verbunden sind, so dass sie, was häufig erwünscht ist, nicht aus dem Schlauch, der zur Sanierung eines Rohrs diente, herausgezogen werden kann.

In der EP 1 333 210 A1 wird ein Verbundrohr mit einer Polytetrafluorethyleninnenschicht und einer faserverstärkten Kunststoffschicht als äußere Deckschicht beschrieben. Die beiden Schichten werden durch eine Zwischenlage, die aus einer Polyfluoralkoxy-Tetrafluorethylen (PFA) und einem textilen Produkt, insbesondere einem Gewebe, haft- und scherfest miteinander verbunden sind. Hinweise, die Innenschicht aus modifiziertem Polytetrafluorethylen herzustellen sind in dieser europäischen Patentschrift nicht zu finden, außerdem ist die Innenschicht nicht herausnehmbar und kann somit nicht separat recycelt werden; für die Rohrsanierung ist das dort beschriebene Verbundrohr nicht geeignet.

Dokument EP 1 857 259 offenbart auch einen mehrschichtigen Schlauch.

Obwohl bereits zahlreiche Schläuche der oben stehend angegebenen Art und Verfahren zu deren Herstellung bekannt sind und auch Vorrichtungen zur Herstellung derartiger mehrschichtiger Schläuche zum Stand der Technik gehören, besteht noch ein Bedürfnis nach Schläuchen dieser Art mit verbesserten Eigenschaften und nach entsprechenden Verfahren und Vorrichtungen zu deren Herstellung.

Aufgabe der Erfindung ist es deshalb, mehrschichtige Schläuche zur Verfügung zu stellen, die verbesserte Eigenschaften gegenüber den mehrschichtigen Schläuchen aufweisen, die aus dem Stand der Technik bekannt sind, insbesondere eine verbesserte chemische und mechanische Stabilität, und zwar gegenüber einer Vielzahl von Fluiden, d. h. Flüssigkeiten und Gasen, sodass der Transport von Abwässern, Chemikalien, Ölen usw. möglich ist, ohne das es zu Auflöseerscheinungen und/oder mechanischen Beeinträchtigungen an der Innenfolie kommt, z. B. durch Abreißen von Fetzen, kleineren Partikeln, und die aufgrund Ihrer chemischen und mechanischen Stabilität auch sehr geeignet sind beim Transport von Fluiden, bei denen es besonders oft das Vermeiden von Einbringen von Verunreinigungen ankommt wie beim Transport von Trinkwasser, reinen Lösungsmitteln oder Lösungen, die korrosionsbeständig sind und eine lange Lebensdauer besitzen und vielseitig verwendbar sind. Aufgabe der Erfindung ist es ferner mehrschichtige Schläuche zur Verfügung zu stellen, die einfach und wirtschaftlich herzustellen sind, komplett werkseitig hergestellt werden können. So ist es möglich, sie auf Bestellung zur sofortigen Lieferung, aber auch auf Lager zu produzieren. Die mit dem nicht ausgehärteten Harz versehenen Schläuche sind mehrere Monate, mindestens bis zu 6 Monate lagerfähig. Da die Rohre im gefalteten Zustand gelagert werden können, ist auch der Platzbedarf für die Lagerung gering. Am Einsatzort brauchen sie lediglich eingezogen, aufgeblasen und ausgehärtet werden. Sie können aber auch an Ort und Stelle direkt hergestellt werden.

Sie sind vielseitig verwendbar, temperaturbeständig, in verschiedenen Stärken und Größen (Wandstärke und Längen) sowie unterschiedlichen Durchmessern herstellbar und beim Einziehen in ein zu sanierendes Rohr in Längsrichtung nicht oder weitgehend nicht dehnbar, in radialer Richtung jedoch ausweichend dehnbar. Aufgabe der Erfindung ist es auch mehrschichtige Schläuche zur Verfügung zu stellen, bei denen ggf. die Innenfolie z.B. nach Installation des Schlauches zur Sanierung eines Rohres einfach herausgezogen und somit auf einfache Weise recycelt werden können, mit denen es aber auch möglich ist, eine feste Verbindung zwischen Innenfolie und den darüber liegenden Schichten herzustellen, so dass der mehrschichtige Schlauch in sich einen festen Zusammenhält aufweist und sich quasi wie ein Rohr aus einem einheitlichen Material verhält.

Diese Aufgabe wird gelöst durch einen mehrschichtigen Schlauch gemäß der Lehre von Patentanspruch 1.

Vorteilhafte Ausführungsformen werden in den Ansprüchen 2 bis 10 beschrieben.

Ein weiterer Gegenstand der Erfindung ist ein Verfahren zur Herstellung mehrschichtiger Schläuche wie es in Anspruch 11 gelehrt wird.

Vorteilhafte Ausführungsformen dieses erfindungsgemäßen Verfahrens werden in den Patentansprüchen 12 bis 18 umrissen.

Ein weiterer Gegenstand der Erfindung ist die Verwendung dieser mehrschichtigen Schläuche gemäß den Ansprüchen 19 bis 21 und Anspruch 22.

Die Herstellung der erfindungsgemäßen Schläuche, kann auf folgende Weise geschehen.

Zunächst wird eine schlauchförmige Folie hergestellt, die als Innenfolie in dem mehrschichtigen Schlauch dienen soll. Dazu wird entweder direkt durch Extrudieren eines modifizierten Polytetrafluorethylens durch eine Ringdüse eine entsprechende Schlauchfolie mit dem gewünschten Durchmesser hergestellt.

Vorzugsweise wird jedoch zunächst eine Flachfolie aus dem modifizierten Polytetrafluorethylen hergestellt, wobei man die Folie mittels Extrusion durch eine Breitschlitzdüse in einer Breite herstellt, die auf den Durchmesser des herzustellenden Schlauches abgestimmt ist, oder man zerteilt eine Folie größerer Breite durch Schneiden in Bänder, deren Breite ebenfalls so groß ist, dass man durch Falten einen entsprechenden Schlauch bilden kann.

Die Folie wird dann gefaltet und an den Längsseiten verbunden. Dies kann durch Verkleben geschehen oder auch durch Zusammenschweißen. Beim Verbinden der beiden Seiten arbeitet man mit einer gewissen Überlappung, d.h. man faltet die Flachfolie so, dass an den Rändern ein Stück auf dem darunter liegenden Randstück zu liegen kommt und verschweißt dann die Flachfolie zu einer Schlauchfolie. Anstelle des Verschweißens kann auch eine Verklebung mit einem üblichen Kleber vorgenommen werden.

Die Größe der Überlappung soll so groß sein, dass eine genügend feste Verklebung durchgeführt werden kann bzw. dass genügend Fläche für eine entsprechende Verschweißung gegeben ist.

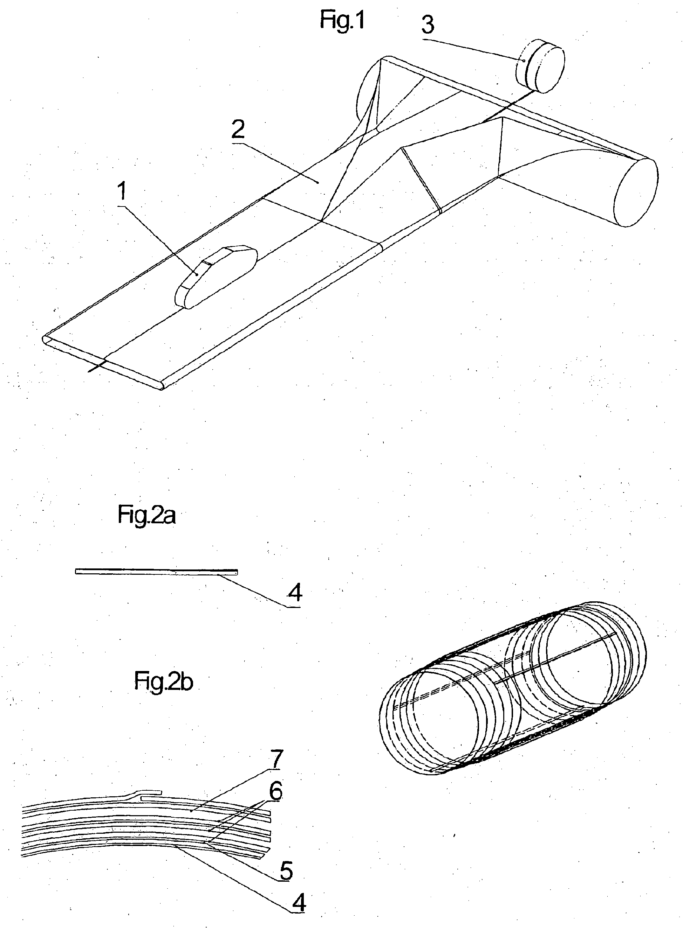

In Figur 1 ist schematisch eine Vorrichtung dargestellt die zeigt, wie aus einer Flachfolie eine entsprechende Schlauchfolie hergestellt werden kann.

Die Flachfolie (2) wird von einer Rolle abgezogen und zusammengefaltet und an ihren Rändern überlappend zusammengefügt.

Ein Schweißgerät (1) schweißt die überlappenden Ränder zusammen, so dass eine feste fluiddichte Schlauchfolie entsteht, d.h. eine Folie, die im Wesentlichen undurchlässig ist gegenüber Flüssigkeiten und Gasen. Die Folie besteht aus modifiziertem Polytetrafluorethylen.

In der Figur ist eine besondere Ausführungsform für die Erfindung wiedergegeben, bei der von einer Rolle (3) gleichzeitig bei der Herstellung der Schlauchfolie ein Zugband mit eingezogen werden kann. Dieses Zugband kann dazu dienen, durch den fertigen Schlauch z.B. eine oder mehrere UV-Lampen hindurchzuziehen, um das ungehärtete Harz, das sich in den weiteren Schichten befindet, auszuhärten. Anstelle der UV-Lampen, von denen eine oder mehrere eingesetzt werden kann, z.B. in Form einer Lichterkette, können auch anderen Vorrichtungen durchgezogen werden, die das Aushärten des nicht ausgehärteten Harz in der darüber liegenden Schicht bewirken, z.B. Wärmestrahler oder Infrarotstrahler oder sonstige Strahler.

Die Dicke der Innenfolie liegt im Allgemeinen zwischen 20 und 1000 µm, kann jedoch auch in dünneren oder dickeren Ausführungen gestaltet werden. Die Länge der Schlauchfolie kann auf den vorgesehenen Einsatzzweck eingestellt werden. So ist es möglich Schläuchen mit einer Länge von wenigen Metern, aber auch bis zu 300 m in einem Stück herzustellen. Selbstverständlich kann man auch größere Längen auf kleinere Längen schneiden.

Es ist vorteilhaft, wenn man bei der Herstellung der Innenfolie gleichzeitig das Zugband einlegt, das mindestens die Länge des herzustellenden Rohres aufweist. Dieses Zugband kann dazu dienen, z. B. eine Lichtkette mit UV-Lampen durch den ganzen Schlauch zu ziehen, um dadurch das noch nicht ausgehärtete Harz der Zwischenschichten auszuhärten.

Die innere Schlauchfolie kann jedoch auch aus zwei Flachfolien hergestellt werden. Dabei können die beiden Flachfolien ähnlich wie bei der Herstellung der Schlauchfolie aus einer Flachfolie überlappend miteinander verbunden werden, wobei es bei der Überlappung mehrere Möglichkeiten gibt.

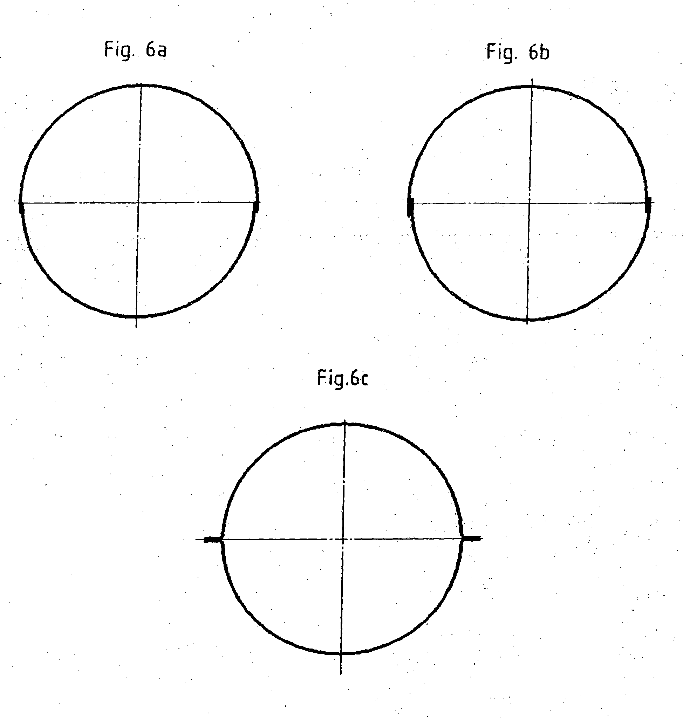

Diese Überlappungen werden schematisch in Figur 6 dargestellt. So zeigt Figur 6a eine Ausführungsform, bei der eine Flachfolie eine andere jeweils an den Kanten überlappt. In Figur 6b wird eine Ausführungsform dargestellt, wo die eine erste Folie an der einen Verbindungsstelle die andere überlappt und an der anderen Verbindungsstelle die andere Folie die erste Folie überlappt.

In Figur 6c wird eine weitere Möglichkeit der Verbindung der beiden Flachfolien gezeigt, wobei die Folien jeweils an ihren Kanten abgeknickt werden und die abgeknickten Teile miteinander verklebt oder verschweißt werden. Ausführungsformen gemäß Figur 6a oder 6b sind bevorzugt.

Als Material für die Herstellung des Innenschlauches dient modifiziertes Polytetrafluorethylen. Dieses Material weist zu einem großen Teil noch die vorteilhaften Eigenschaften bezüglich Beständigkeit gegenüber Chemikalien, wie es das reine Polytetrafluorethylen (Teflon) aufweist, ist andererseits aber besser zu verarbeiten wie das Teflon selbst.

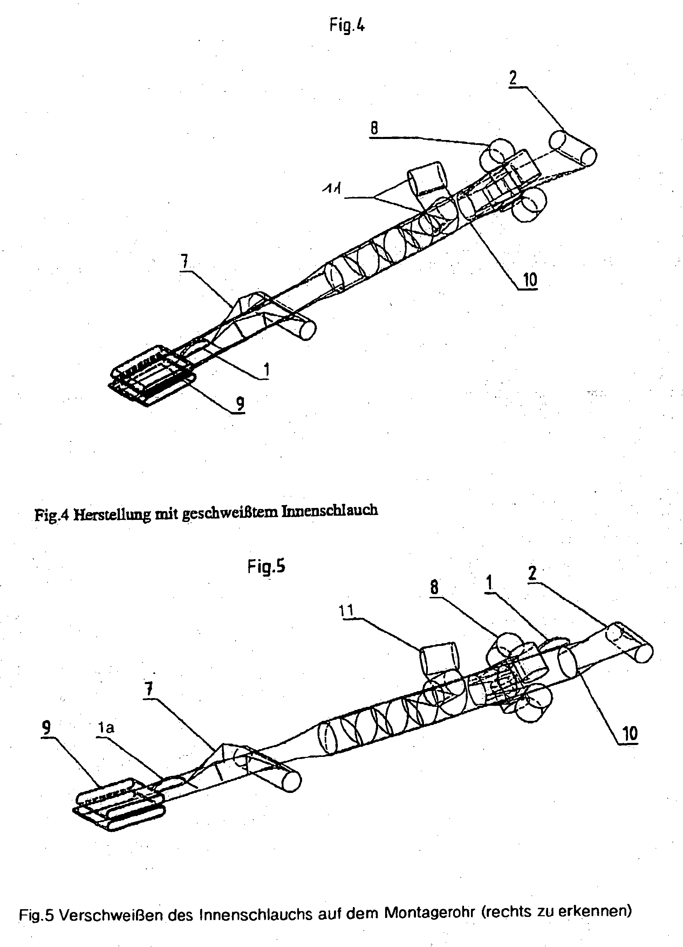

Zur Herstellung der erfindungsgemäßen mehrschichtigen Schläuche ist besonders vorteilhaft eine Vorrichtung geeignet, wie sie in der Figur 4 oder wie sie in der Figur 5 schematisch dargestellt ist.

In Figur 4 stellt (2) eine bereits fertige Schlauchfolie aus modifiziertem PTFE dar, die durch Montagerohr (10) gezogen wird. Von einer oder mehreren Rollen werden von einer oder mehreren Seiten eine oder mehrere getränkte Gewebebahnen 8 in Längsrichtung auf das Rohr gezogen. Von einer oder mehreren weiteren Rollen werden eine oder mehrere Gewebebahnen spiralförmig über die in Längsrichtung ausgerichteten Gewebebahnen aufgespult. (7) stellt eine Außenfolie dar, die über die bereits mit textilen Flächengebilden versehene Innenfolie aufgebracht und mit einem Schweißgerät (1) verschweißt wird oder ggf. auch mit Hilfe eines Klebers verbunden wird. Hinter dem Rohr (10) werden die Gewebebahnen über die Innenfolie gezogen.

(9) ist ein Zugförderband, mit welchem der mehrschichtige Schlauch abgezogen wird. Figur 5 unterscheidet sich von Figur 4 insofern, als dass dort eine Flachfolie (2) aus modifiziertem PTFE von einer Rolle abgezogen wird, die das Rohr von außen umschlingt und mit einer Schweißvorrichtung (1) an den Rändern verschweißt wird. Sodann werden die getränkten faserigen Bahnen, zum Beispiel Gewebebänder, in Längsrichtung und spiralförmig auf die Innenschlauchfolie aufgebracht.

Die Vorrichtung, welche in Figur 5 schematisch dargestellt ist, wird bevorzugt im Rahmen der Erfindung verwendet. Sie bietet unter anderem den Vorteil, dass die getränkten Bahnen nicht direkt mit dem Montagerohr in Berührung kommen, was eine bessere saubere und wartungsfreiere Herstellung gewährleistet.

Modifiziertes Polytetrafluorethylen ist an sich bereits bekannt. Besonders vorteilhaft im Rahmen der Erfindung ist jedoch ein modifiziertes Polytetrafluorethylen wie es in der US-Patentschrift 6,531,559 B1 beschrieben wird. Auf dieses Dokument wird sich hier ausdrücklich bezogen und der Inhalt dieser Patentschrift wird hiermit als Offenbarung mit eingeschlossen.

In dieser US-Patentschrift werden die Eigenschaften dieser modifizierten Polytetrafluorethylene, aus welchen bevorzugt die Innenfolie erfindungsgemäß besteht, ausführlich beschrieben, ebenso deren Herstellung und die einschlägigen Messverfahren zur Bestimmung der Eigenschaften.

Vorzugsweise weist das modifizierte Polytetrafluorethylen einen Schmelzindex zwischen 0,25 und 50 g / 10 min, eine Bruchdehnung von mindestens 10 %, eine Kristallinität von 1 - 55 %, einen Comonomergehalt von weniger als 1 Gewichts-% und weniger als 0,5 Mol-% auf.

Die Comonomeren sind bevorzugt aus der Gruppe von Hexafluorpropylen und Perfluor(alkylvinylether) ausgewählt.

Der Plateau-Wert der komplexen Viskosität, gemessen bei Frequenzen unterhalb 0,01 rad/s und einer Temperatur von 380 °C liegt vorzugsweise zwischen 2 · 10⁴ und 10⁹ Pa · s.

Das gemäß der Erfindung bevorzugte modifizierte Polytetrafluorethylen wird auch näher erläutert in der DE 601 29 112 T2, die auf den gleichen Anmelder wie bei der Us 6,531,559 B1 zurückgeht. Auch auf diese Veröffentlichung wird sich ausdrücklich bezogen und als Offenbarung mit eingeschlossen.

Die Innenfolie, welche gemäß der Erfindung zum Einsatz gelangt, kann vorteilhaft auch aus einem Material bestehen, dass unter dem Handelsnamen Modflon bei der Firma ElringKlinger AG, D-72581 Dettingen, erhältlich ist.

Es können aber auch andere, handelsübliche modifizierte Polytetrafluorethylene verwendet werden.

Bei einer weiteren bevorzugten Ausführungsform wird sodann auf die Innenfolie zunächst ein Vlies aufgebracht, und zwar insbesondere ein so genanntes Spun Bond Vlies, bei dem es sich um ein Wirrwarvlies aus Endlosfäden aus Polyethylenterephthalat handelt. Derartige Vliese sind z. B. bei der Firma John's Manville, D 86399 Bobingen, erhältlich. Es können aber auch Vliese aus einem anderen synthetischen Material eingesetzt werden, z. B. vorteilhaft aus Polyacryl.

Der Folierlschlauch, der als innere Einlegefolie dient, wird mit Auflage eines Vlieses oder auch ohne die entsprechende Auflage mit einer oder mehreren flächenförmigen faserigen Schichten belegt. Bei diesen faserigen Schichten kann es sich handeln um Gewebe, Vliese, Gewirke und ähnliches, die entweder bereits getränkt mit einem aushärtbaren Harz versehen sind oder erst getränkt werden, wenn sie auf der Innenfolie aufgebracht sind.

Zum Tränken der Flächengebilde kann eine übliche Wanne dienen, die mit entsprechendem aushärtbarem Harz gefüllt ist, durch welche die flächenförmige Bahn gezogen wird. Bei den nicht ausgehärteten Harzen kann es sich um übliche härtbare Harze handeln. Hier seien bekannte Produkte wie Palatal 92 I von der BASF, Ludwigshafen oder Oldupal A 410 I von BUETA genannt.

Das noch nicht ausgehärtete Harz, kann auf übliche Art und Weise z. B. durch Behandeln von UV-Licht gehärtet werden, es ist aber auch eine Heißdampf- oder Warmwasseraushärtung möglich. Selbstverständlich können auch andere heiße Gase insbesondere auch Wasserdampf eingesetzt werden. Beim Verwenden von Gasen oder auch Wasser kann dieses Fluid gleichzeitig auch zum Ausüben eines Drucks auf den Schlauch dienen, damit dieser an die Innenwand des zu sanierenden Rohres gedrückt wird:
Das Beschichten mittels des faserhaltigen, flächenförmigen Gebildes erfolgt vorzugsweise nach einem Wickelverfahren mit flächenförmigen, faserhaltigen Bahnen insbesondere längsverlaufenden Gewebebahnen.

Dazu kann ein Verfahren und eine Vorrichtung dienen, wie sie in der Europäischen Patentschrift EP 0712352 B1 beschrieben wird. Auf die Offenbarung in dieser Patentschrift wird sich hier ausdrücklich bezogen und auch als Offenbarung hier miteinbezogen.

Bevorzugt wird jedoch erfindungsgemäß eine Vorrichtung verwendet, wie sie in den Ansprüchen 19 und 20 beschrieben wird. Diese Vorrichtung, die in den Figuren 4 und 5 schematisch erläutert wird, erlaubt das gleichzeitige Aufbringen von längsverlaufenden und spiralförmig verlaufenden Bahnen.

Als abschließende Schicht kann eine weitere Folie aufgebracht werden, vorzugsweise eine Folie aus dem gleichen Material wie die Innenfolie, d. h. aus einem modifizierten Polytetrafluorethylen.

Es können aber auch sonstige handelsübliche Folien aufgebracht werden, insbesondere PA/PE Folien (Polyamid/Polyethylen). Vor allem bei Einsatz von UV-härtbarem Harz soll die äußere Folie UV-Licht undurchlässig sein.

In einer bevorzugten Ausführungsform wird auch die Außenfolie mit einem Vlies laminiert und so auf die faserigen flächenförmigen Schichten aufgebracht. Dadurch wird bei der Aushärtung eine noch bessere, festere Verbindung mit den flächenförmigen faserigen Schichten erreicht. Als Vlies kann zum Beispiel ein Polyestervlies dienen. Vliese aus anderen Materialien können jedoch auch verwendet werden.

Der so hergerichtete Schlauch wird sodann in entsprechender Länge in ein zu sanierendes Rohr gezogen, sodann wird mittels eines Fluids insbesondere mittels Luft ein Druck erzeugt, wodurch der Schlauch an die Innenwand des zu sanierenden Rohres gedrückt wird. Sodann erfolgt die Aushärtung. Dadurch wird der Schlauch fest und lehnt sich auch fest an das zu sanierenden Rohr an. Der Schlauch weist einen selbsttragenden Charakter auf.

Der Schlauch gemäß der Erfindung, ermöglicht es, durch das sanierte Rohr aufgrund seiner chemischen Beständigkeitden Transport von praktisch allen Fluiden wie Gasen, Flüssigkeiten wie Öle, Abwässer, chemische Lösungen und sogar von pumpbaren frieselfähigen Teilchen. Die Innenfolie ist chemisch und mechanisch sehr stabil, dadurch wird vermieden, dass sich Teile der Innenwand im Laufe der Zeit auflösen und einmal zum Verunreinigen des zu transportierenden Guts beitragen, zum anderen wird auch vermieden, dass die Innenwand durch chemische Prozesse zerstört wird. Da die Wand auch sehr stabil ist, wird vermieden, dass durch die mechanische Reibung Partikel oder Fetzen von der Innenwand abgerissen werden und nach kurzer Zeit wieder eine neue Sanierung notwendig ist.

Die Schläuche gemäß der Erfindung können aber auch zu selbstständigen Schläuchen in Rohrform verarbeitet werden, sodass sie selbsttragende, selbstständige Rohre sind, die als solche zum Transport von Fluiden und rieselfähigen Partikeln dienen können.

Besonders vorteilhaft bei der Erfindung ist es, dass gemäß der Erfindung mehrschichtige Schläuche hergestellt werden können bei denen, sofern nicht ein Vlies auf die Innenfolie aufgebracht worden ist, die Innenfolie nach der Sanierung des Rohrs herausgezogen werden kann und einfach recycelt werden kann.

Die Herstellung ist sehr einfach und wirtschaftlich. Von Vorteil ist ferner, dass mit der erfindungsgemäßen Vorrichtung auch Rohre mit verschiedenen Durchmessern hergestellt werden können. So kann man durch Anzahl der Schichten, die in Längsrichtung aufgebracht werden, das gleiche gilt auch für die Schichten, die spiralförmig aufgebracht werden, die Stärke der Rohrwand steuern. Mit Hilfe der in Längsrichtung aufgelegten Bänder kann man auch erreichen, dass die Dehnung in Längsrichtung reduziert wird.

Von Vorteil ist es ferner, dass man bei der Ausführungsform mit einer Vliesauflage auf der Innenfolie erreicht werden kann, dass der Zusammenhalt der einzelnen Schichten im Mehrschichtenrohr sehr fest ist, so dass sich das Rohr quasi wie ein Rohr aus einem einzigen Material verhält. Die Innenfolie verleiht dem fertigen Rohr auch besondere Eigenschaften, insbesondere ihre Einsatzfähigkeit für ein großes Spektrum von Fluiden wie Flüssigkeiten und Gase. Die Rohre sind auch sehr gut zum Transport von Trinkwasser geeignet, ohne dass während des Transportes eine Qualitätseinbuße des Trinkwassers zu befürchten ist.

Die Rohre sind mechanisch sehr gut haltbar, korrosionsbeständig und entsprechend sanierte Rohre weisen eine verlängerte Lebensdauer auf, so dass die Sanierungszyklen beachtlich verlängert werden können.

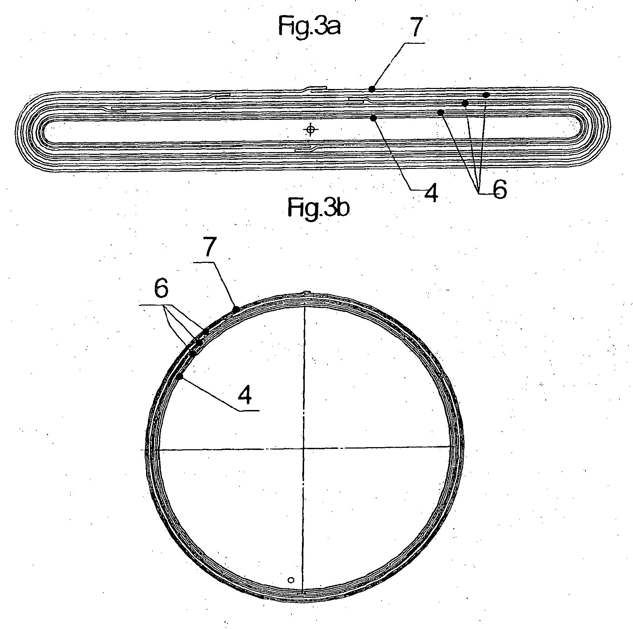

In Figur 2a wird ein Teil einer beschichteten Innenfolie gezeigt, die mit einem Vlies beschichtet ist. Figur 2b zeigt einen Teilausschnitt aus einem Mehrschichtenschlauch, bei dem noch eine weitere Gewebeschicht 5, eine weitere Lage aus einem tränkbaren Material 6 sowie eine Außenfolie, die UV-Licht undurchlässig und vliesbeschichtet ist, aufgebracht ist. Figur 3a stellt einen Mehrschichtenschlauch gemäß der Erfindung in gefalteter Form vor. In Figur 3b wird dieser Schlauch in Rundform dargestellt, so wie er sich nach Einbringen in ein zu sanierendes Rohr und Ausblasen mit Luft darstellt.

Die Erfindung wird durch folgendes Beispiel näher erläutert:
Der beschriebene Schlauch wird werksseitig nach den Erfordernissen des zu sanierenden Rohres hergestellt. Es werden Durchmesser, Länge und Stärke entsprechend angepasst. Danach wird der Schlauch aufgewickelt oder zusammengefaltet zum Einsatzort transportiert. Vor dem Einbau erfolgt eine Videoinspektion des zu sanierenden Altrohres, sowie eine Reinigung mittels Spülroboters. Etwaige Beschädigungen oder Wurzeleinwüchse werden mittels Roboter mechanisch entfernt. Sodann erfolgt der Einzug des Schlauches über Winden durch einen Kanalschacht oder eine entsprechenden Inspektionsöffnung bis zu nächsten Öffnung. Die UV Lichtquelle wird dann am Anfang in den Schlauch platziert. Die Enden des Schlauches werden mit Deckeln luftdicht verschlossen und aufgeblasen. Durch den Luftdruck wird der Schlauch an das vorhandene Altrohr gepresst und die UV-Lichtquelle gestartet. Durch Öffnungen im Deckel wird ein Kabel zur Stromversorgung der Lichtquelle geführt und die Lichtquelle durch den Schlauch gezogen. Durch die UV-Bestrahlung wird das Harz aktiviert und die Aushärtung beginnt. Nach erfolgter Aushärtung werden Deckel, Lichtquelle und Innenfölie entfernt und Abzweigungen etc. mittels Roboters aufgefräst. Wird eine vliesbeschichtete Innenfolie verwendet, bleibt diese als dauerhafte Beschichtung im Rohr. Ebenso werden Anfang und Ende an das Rohrende angepasst. Anschließend wird das fertig sanierte Rohr videodokumentiert.

## Patentansprüche

1. Mehrschichtiger Schlauch umfassend als erste Schicht eine schlauchförmige Innenfolie aus synthetischem Polymer und mindestens einer weiteren flächenförmigen Schicht, **dadurch gekennzeichnet, dass** die Innenfolie aus einem modifizierten Polytetrafluorethylen besteht, wobei das modifizierte Polytetrafluorethylen einen Schmelzindex zwischen 0,25 und 50 g / 10min, eine Bruchdehriung von mindestens 10 %, eine Kristallinität von 1 bis 55 % und einen Comonomerengehalt von weniger als 1 Gewichts-% und weniger als 0,5 Mol-% aufweist und der Schlauch mindestens eine weitere flächenförmige faserige Schicht aufweist, die mit einem härtbaren Harz getränkt ist.

2. Mehrschichtiger Schlauch gemäß Anspruch 1, **dadurch gekennzeichnet**, das die Comonomeren ausgewählt sind aus der Gruppe von Hexafluorpropylen und Perfluoralkylvinylether.

3. Mehrschichtiger Schlauch nach Anspruch 1, **dadurch gekennzeichnet, dass** er zusätzlich eine Außenfolie aus synthetischem Polymer aufweist.

4. Mehrschichtiger Schlauch nach mindestens einem der Ansprüche 1 bis 3, **dadurch gekennzeichnet, dass** der Schlauch 2 bis 8 flächenförmige faserige Schichten aufweist.

5. Mehrschichtiger Schlauch nach mindestens einem der Ansprüche 1-4, **dadurch gekennzeichnet, dass** der Schlauch eine Außenfolie oder eine über eine der faserigen Schichten angeordnete Folie aufweist, die UV-Licht undurchlässig ist und ggf. mit einem Vlies laminiert ist.

6. Mehrschichtiger Schlauch nach mindestens einem der Ansprüche 1 bis 5, **dadurch gekennzeichnet, dass** die Innenfolie mit einem Vlies laminiert ist.

7. Mehrschichtiger Schlauch nach Anspruch 6, **dadurch gekennzeichnet, dass** das Vlies aus synthetischen Fasern insbesondere ein Spun Bond Vlies aus Polyethylenterephthalatfasern ist.

8. Mehrschichtiger Schlauch nach mindestens einem der Ansprüche 1 bis 7, **dadurch gekennzeichnet, dass** mindestens eine der flächenförmigen faserigen Schichten ein rundgewebter Schlauch ist.

9. Mehrschichtiger Schlauch nach mindestens einem der Ansprüche 1 bis 8, **dadurch gekennzeichnet, dass** bei mindestens einer der flächenförmigen faserigen Schicht die Fasern zu einem größeren Teil in Längsrichtung und zu einem geringeren Teil in Querrichtung ausgerichtet sind.

10. Mehrschichtiger Schlauch nach mindestens einem der Ansprüche 1 bis 9, **dadurch gekennzeichnet, dass** der Schlauch ein oder mehrere in Längsrichtung aufgelegte und/oder ein oder mehrere spiralförmig aufgelegte flächenförmige faserige Schichten als Bänder aufgelegte Schichten aufweist.

11. Verfahren zur Herstellung eines mehrschichtigen Schlauches umfassend eine erste Schicht in Form einer schlauchförmigen Innenfolie aus synthetischem Polymer und mindestens einer weiteren flächenförmigen Schicht, **dadurch gekennzeichnet, dass** man zunächst eine schlauchförmige Innenfolie aus einem modifizierten Polytetrafluorethylen herstellt, wobei das modifizierte Polytetrafluorethylen einen Schmelzindex zwischen 0,25 und 50 g / 10min, eine Bruchdehnung von mindestens 10 %, eine Kristallinität von 1 bis 55 % und einen Comonomerengehalt von weniger als 1 Gewichts-% und weniger als 0,5 Mol-% aufweist, auf die Innenfolie ein oder mehrere flächenförmige faserige Schichten aufbringt, welche mit einem härtbaren Harz getränkt ist bzw. getränkt sind und ggfs. eine Außenfolie aus einem synthetischen Polymer aufbringt.

12. Verfahren nach Anspruch 11, **dadurch gekennzeichnet, dass** man eine Außenfolie aus einem modifizierten Polytetrafluorethylen aufbringt.

13. Verfahren nach mindestens einem der Ansprüche 11 oder 12, **dadurch gekennzeichnet, dass** man auf die Innenfolie ein Vlies aufbringt vorzugsweise ein Spun Bond Vlies aus Polyethylenterephthalat.

14. Verfahren nach mindestens einem der Ansprüche 11 bis 13, **dadurch gekennzeichnet, dass** man die schlauchförmige Innenfolie aus einer Flachfolie aus einem modifizierten Polytetrafluorethylen herstellt, indem man die Flachfolie an ihren Seiten überlappend verbindet.

15. Verfahren nach Anspruch 14, **dadurch gekennzeichnet, dass** man das Verbinden durch Schweißen oder Kleben vornimmt.

16. Verfahren nach mindestens einem der Ansprüche 11 bis 15, **dadurch gekennzeichnet, dass** man 1 bis 8 faserige Schichten als Faserbänder nach dem Wickelverfahren aufbringt.

17. Verfahren nach mindestens einem der Ansprüche 11 bis 16, **dadurch gekennzeichnet, dass** man als flächenförmige faserige Schicht Glasfaser-Gewebe, - Gelege, und/oder - Gewirke, und/oder Glasfasermatten, und/oder Vliese allein oder in Kombination oder Gewebe, Gelege, Gewirke, Matten oder Vliese aus synthetischen Fasern aufbringt.

18. Verfahren nach mindestens einem der Ansprüche 11 oder 17, **dadurch gekennzeichnet, dass** man die flächenförmigen faserigen Schichten mit einer Überlappung von 0 bis 25 % aufbringt.

19. Verwendung der mehrschichtigen Schläuche nach mindestens einem der Ansprüche 1 bis 10 oder hergestellt nach einem Verfahren gemäß mindestens einem der Ansprüche 11 bis 18 zum Sanieren von Rohrleitungen, indem man die mehrschichtigen Schläuche in die zu sanierende Rohrleitung oder in Rohrleitungsabschnitt einbringt, sie mit Hilfe von Druck eines Fluids an die Innenwand des zu sanierenden Rohres andrückt und sodann das Harz aushärtet, sodass der Schlauch fest an der Innenwand des zu sanierenden Rohres anhaftet.

20. Verwendung nach Anspruch 19, dass man zum Aushärten UV-Licht verwendet.

21. Verwendung nach Anspruch 20, **dadurch gekennzeichnet, dass** man zum Aushärten ein erhitztes Gas verwendet insbesondere Dampf.

22. Verwendung der mehrschichtigen Schläuche nach mindestens einem der Ansprüche 1 bis 10 oder hergestellt nach einem Verfahren gemäß mindestens einem der Ansprüche 11 bis 18, als selbständig Rohre zum Transport von Gasen, flüssigen und pumpfähigen Partikeln, indem man die Schläuche in eine runde rohrförmige Gestalt bringt und das Harz mittels UV-Licht oder durch Einwirken von Wärme aushärtet.

## Claims

1. Multilayer tube comprising as first layer a tube like inner film made of synthetic polymer and at least a further sheet like layer **characterized in that** the inner film consists of a modified polytetrafluoroethylene whereby the modified polytetrafluoroethylene has a melt flow index between 0.25 and 50 g/10 min, a strain at break of at least 10 %, a crystallinity of 1 to 55 %, and a proportion of comonomers of less than 1 weight% and less than 0.5 mol%, and the tube comprises at least one further sheet like fibrous layer which is impregnated with a curable resin.

2. Multilayer tube according to claim 1, **characterized in that** the comonomers are chosen from the group of hexafluoropropylene and perfluoroalkylvinylether.

3. Multilayer tube according to claim 1, **characterized in that** it exhibits additionally an outer film of synthetic polymer.

4. Multilayer tube according to at least one of the claims 1 to 3, **characterized in that** the tube exhibits 2 to 8 sheet like fibrous layers.

5. Multilayer tube according to at least one of the claims 1 to 4, **characterized in that** the tube exhibits an outer film or a film which is located over one of the fibrous layers, which is UV-light impermeable and optionally laminated with a non-woven.

6. Multilayer tube according to at least one of the claims 1 to 5, **characterized in that** the inner film is laminated with a non-woven.

7. Multilayer tube according to claim 6, **characterized in that** the non-woven is made of synthetic fibres especially a spun bond non woven of polyethyleneterephthalat fibers.

8. Multilayer tube according to at least one of the claims 1 to 7, **characterized in that** at least one of the sheet like fibrous layers is a round-woven tube.

9. Multilayer tube according to at least one of the claims 1 to 8, **characterized in that** at at least one of the sheet like fibrous layers the fibers are oriented for the greater part in the length direction and for a smaller part in transverse direction.

10. Multilayer tube according to at least one of the claims 1 to 9, **characterized in that** the tube exhibits one or more layers located on as tapes in length direction and/or one or more sheet like fibrous layers located as tapes in spiral form.

11. Method for manufacturing a multilayer tube comprising a first layer in form of a tube like inner film of synthetic polymer and at least one further sheet like layer, **characterized in that** first a tube like inner film is manufactured from a modified polytetrafluoroethylene whereby the modified polytetrafluoroethylene exhibits a melt flow index between 0.25 and 50 g/10 min, a strain at break of at least 10 %, a crystallinity of 1 to 55% and a proportion of comonomer of less than 1 weight% and less than 0.5 mol%, one or more sheet like fibrous layers are put on the inner film which is or are impregnated with a curable resin and optionally an outer film a synthetic polymer is put on.

12. Method according to claim 11, **characterized in that** an outer film of modified polytetrafluoroethylene is put on.

13. Method according to one of the claims 11 or 12, **characterized in that** a non-woven, preferentially a spun bond non-woven of polyethyleneterephthalat is put on the inner film.

14. Method according to at least one of the claims 11 to 13, **characterized in that** the tube like inner film is manufactured from a flat film of a modified polytetrafluoroethylene whereby the flat film is connected overlapping at its edges.

15. Method according to claim 14, **characterized in that** the connecting is performed by welding or gluing.

16. Method according to at least one of the claims 11 to 15, **characterized in that** 1 to 8 fibrous layers are put on as fiber tapes according to the winding procedure.

17. Method according to at least one of the claims 11 to 16, **characterised in that** as sheet like fibrous layer glassfiber wovens, scrims and/or knitted fabrics and/or glass fiber mats and/or non-wovens alone or in combination or wovens, scrims, knitted fabrics, mats or non wovens of synthetic fibers glass are put on.

18. Method according to claim 11 or 17, **characterized in that** the sheet like fibers layers are put on with an overlapping of 0 to 25%.

19. Use of the multilayer tubes according to at least one of the claims 1 to 10 or manufactured according a method according at least one of the claims 11 to 18 for repairing pipelines whereby the multilayer tubes are brought into the pipe lines or pipe line sections which are to be repaired whereby they are pressed with the aid of the pressure of a fluid against the inner wall of the pipe which has to be repaired and thereafter curing the resin in order that the tube adheres fast at the inner wall of the pipe which has to be repaired.

20. Use according to claim 19, **characterized in that** UV-light is used for the curing.

21. Use according to claim 20, **characterized in that** a heated gas in particular vapor is used for the curing.

22. Use of the multilayer tubes according to at least one of the claims 1 to 10 or manufactured according a method according at least one of the claims 11 to 18, **characterized in that** they are used are as independent pipes for the transport of gases, liquid and pumpable particles, whereby the tubes are formed in the round tube like shape and the resin is cured with the aid of UV-light or the influence of warmth.

## Revendications

1. Tuyau à plusieurs couches comprenant comme première couche un film intérieur tubulaire de polymeree synthétique et au moins une autre couche plane **caractérisé en ce que** le film intérieur est constiué par un polyfluoroethylene modifié, le polytetrafluoroethylene modifié ayant un indice de fusion entre 0,25 g et 50 g/ 10 min, un allongement de rupture d'au moins de 10 %, une cristallinité de 1 à 55 % et un contenu de comonomères de moins de 1 % poids et moins de 0,6 % mole et le tuyau comprend une autre couche fibreuse plane qui est impregnée d'une résine durcissable.

2. Tuyau à plusieurs couches selon revendication 1, **caractérisé en ce que** les comonomères sont choisis du groupe d'hexafluoropropylène et perfluoroalkylvinyl ether.

3. Tuyau à plusieurs couches selon revendication 1, **caractérisé en ce qu'**il a additionellenment une feuille extérieure de polymère synthétique.

4. Tuyau à plusieurs couches selon au moins une des revendications 1 à 3 **caractérisé en ce que** le tuyau a 2 à 8 couches fibreuses planes.

5. Tuyau à plusieurs couches selon au moins une des revendications 1 à 4 **caractérisé en ce que** le tuyau a un film extérieur ou un film qui est arrangé au dessus d'une des couches fibreuses et qui est imperméable envers lumière UV et le cas échéant stratifié pas un tissu non tissé.

6. Tuyau à plusieurs couches selon au moins une des revendications 1 à 5 **caractérisé en ce que** la couche intérieure est stratifiée par un tissu non tissé.

7. Tuyau à plusieurs couches selon revendication 6, **caractérisé en ce que** le tissu non tissé est un tissu non tissé de fibres synthétiques particulièrement de polyethylene téréphtalate spun bond.

8. Tuyau à plusieurs couches selon au moins une des revendicatuions 1 à 7 **caractérisé en ce que** au moins une des couches fibreuses planes est un tuyau tissé rond.

9. Tuyau à plusieurs couches selon au moins une des revendications 1 à 8 **caractérisé en ce que** au moins une des couches fibreuses planes comprend des fibres orientées pour la plus partie majoritaire dans la direction logitudinale et pour une moindre partie dans la direction tranversale.

10. Tuyau à plusieurs couches selon au moins une des revendications 1 à 9 **caractérisé en ce que** le tuyau comporte une ou plusieurs couches planes fibreuses déposées dans la direction longitudinale ou une ou plusieurs couches déposées en spirale.

11. Procédé de fabrication d'un tuyau à plusieurs couches comprenant une première couche sous forme d'un film intérieur tubulaire de polymère synthétique et au moins une autre couche plane **caractérisé en ce que** l'on fabrique d'abord un film intérieur tubulaire d'un polytetrafluoroethylène modifié, le polytetrapolyethylene modifié ayant un indice de fusion entre 0,25 et 50 g/10 min, un allongement de rupture d'au moins 10%, une cristallinité de 1 à 55% et un contenu de comonomères de moins de 1 % poids et moins de 0,6 % mole, on arrange sur le film intérieur une ou plusieurs couches fibreuses planes qui sont imprégnées d'une résine durcissable et le cas échéant on arrange un film extérieur de polymère synthétique.

12. Procédé selon revendication 11 **caractérisé en ce que** l'on arrange un film extérieur d'un polytetrafluoroethylene modifié.

13. Procédé selon au moins une des revendications 11 ou 12 **caractérisé en ce que** l'on arrange un tissu non tissé sur le film intérieur, de préférence un tissu non tissé spund bond.

14. Procédé selon au moins une des revendications 11 à 13 **caractérisé en ce que** l'on fabrique le film tubulaire intérieur d'un film plan d'un polytetrafluoroethylene modifié en liant le film plan d'une manière chevauchante à leur cotés.

15. Procédé selon revendication 14 caratérisé en ce que l'on lie par soudage ou collage.

16. Procédé selon au moins une des revendications 11 à 15 **caractérisé en ce que** l'on dépose 1 à 8 couches fibreuses selon le procédé d'enroulement.

17. Procédé selon au moins une des revendications 11 à 16 **caractérisé en ce que** l'on dépose comme couche fibreuse plane des tissus de fibres de verre, une nappe, et/ou maillage, mats, tissus non tissés seuls ou en combinaison ou des tissues, assemblages de fibres, maillages, mats ou tissus non tissés de fibres synthétiques.

18. Procédé selon aus moins une des revendications 11 ou 17 **caractérisé en ce que** l'on dépose les couches fibreuses avec un chevauchement de 0 à 25 %.

19. Utilisation des tuyaus à plusieurs couches selon au moins une des revendications 1 à 10 ou fabriquées selon un procédé selon au moins une des revendications 11 á 18 pour l'assainissement des conduits tubulaires en introduisant les tuyaus à plusieurs couches dans le conduit à assainir ou dans la section du conduits tubulaire et en pressant à l'aide de pression d'un fluide au paroi intérieur du tube à assainir et en durcissant ensuite la résine pour que le tuyau adhère fermement au paroi intérieur du conduit à assainir.

20. Utilisation selon la revendication 19 que l'on utilise pour le durcissement de la lumière UV.

21. Utilisation selon revendication 20 que l'on utilise pour le durcissement du gas chauffé particulairement de la vapeur.

22. Utilisation des tuyaus à plusieurs couches selon au moins une des revendications 1 à 10 ou fabriqués selon un des procédés selon au moins une des revendicatons 11 à 18 comme tubes indépendantes pour le transport de gas, de particles liquides qui peuvent etre pompés en donnant aux tuyaus une forme tubulaire et en durcissant la résine au moyen de lumière UV ou au moyen de chaleur.
